# Europäisches Patentamt
# European Patent Office
# Office européen des brevets

(19)

(11) Veröffentlichungsnummer: **0 103 133**
**B1**

(12) # EUROPÄISCHE PATENTSCHRIFT

(45) Veröffentlichungstag der Patentschrift:
23.04.86

(51) Int. Cl.⁴: **H 02 P 5/16**

(21) Anmeldenummer: 83107567.6

(22) Anmeldetag: 01.08.83

(54) **Regeleinrichtung für Stromrichter.**

(30) Priorität: **13.08.82 DE 3230206**

(43) Veröffentlichungstag der Anmeldung:
**21.03.84 Patentblatt 84/12**

(45) Bekanntmachung des Hinweises auf die Patenterteilung:
**23.04.86 Patentblatt 86/17**

(84) Benannte Vertragsstaaten:
**CH DE FR GB IT LI**

(56) Entgegenhaltungen:
**CH - A - 571 286**
**DD - A - 120 331**
**DE - A - 2 043 709**
**DE - B - 1 563 706**

**ELEKTRIE, Jahrgang 25, Nr. 6, 1971 L. NEUMANN**
**" Geregelte Gleichstromumkehrantriebe für geringe bis**
**extreme dynamische Anforderungen aus dem System**
**thyresch", Seiten 202-204**

(73) Patentinhaber: **Siemens Aktiengesellschaft, Berlin und München Wittelsbacherplatz 2, D-8000 München 2 (DE)**

(72) Erfinder: **Zimmermann, Horst, Noether Strasse 20, D-8520 Erlangen (DE)**

## Beschreibung

Die Erfindung bezieht sich auf eine Regeleinrichtung für einen Stromrichter mit mindestens einer durch einen Steuersatz gesteuerten Thyristorventilgruppe zur Speisung einer Gleichstrommaschine und mit einem von einem Drehzahlregler geführten Stromregler, der dem Steuersatz der im Ankerstromkreis liegenden Ventilgruppe ein Steuersignal vorgibt.

Bekannte Schaltungen dieser Art bestehen z.B. aus antiparallel geschalteten Thyristorventilgruppen mit je einem Steuersatz für jede Ventilgruppe oder einem beiden Ventilgruppen gemeinsamen Steuersatz, bei dem die Steuerimpulse des Steuersatzes über eine Impulsweiche der Ventilgruppe zugeführt werden, die gerade den Strom führen soll. Zur Regelung des Gleichstrommotors wird sein Drehzahlistwert zusammen mit einem Drehzahlsollwert auf einen Drehzahlregler gegeben, dessen Ausgangssignal die Führungsgrösse für einen Stromregler liefert, der seinerseits den Stromistwert von der Wechselspannungsseite des Stromrichters erhält. Das Ausgangssignal des Stromreglers steuert dann den gemeinsamen Steuersatz. Ein erforderlicher Wechsel der Ankerstromrichtung wird von einer Kommandostufe erfasst, die dann die entsprechenden Steuerbefehle abgibt.

Bekannte Schaltungen der vorgenannten Art sind beispielsweise aus der Siemens-Zeitschrift 1965, Seiten 251 und 1081, der DE-PS 1 588 783 und der DE-OS 3 020 139 zu entnehmen.

Die Aufgabe der vorliegenden Erfindung besteht darin, bei einer Regeleinrichtung der eingangs genannten Art das Dynamikverhalten zu verbessern. Diese Aufgabe wird erfindungsgemäss durch die kennzeichnenden Merkmale des Anspruchs 1 gelöst. Auf diese Weise muss der Stromregler nur einen geringen Korrekturwert beitragen, d.h. es braucht durch die Regelung selbst nur noch ein verhältnissmässig kleiner Teil der Regelabweichung ausgeregelt werden, da das Vorsteuersignal schon im wesentlichen dem erforderlichen Signal entspricht. Hierdurch wird die Regeldynamik des Stromrichters wesentlich erhöht. Die vorstehend erwähnte Regeleinrichtung eignet sich auch sehr gut für die Verwendung eines Mikroprozessors, da die Vorsteuerungssignale relativ einfach aus Drehzahlistwert und Stromführungsgrösse berechnet oder aus entsprechenden Tabellen entnommen werden können.

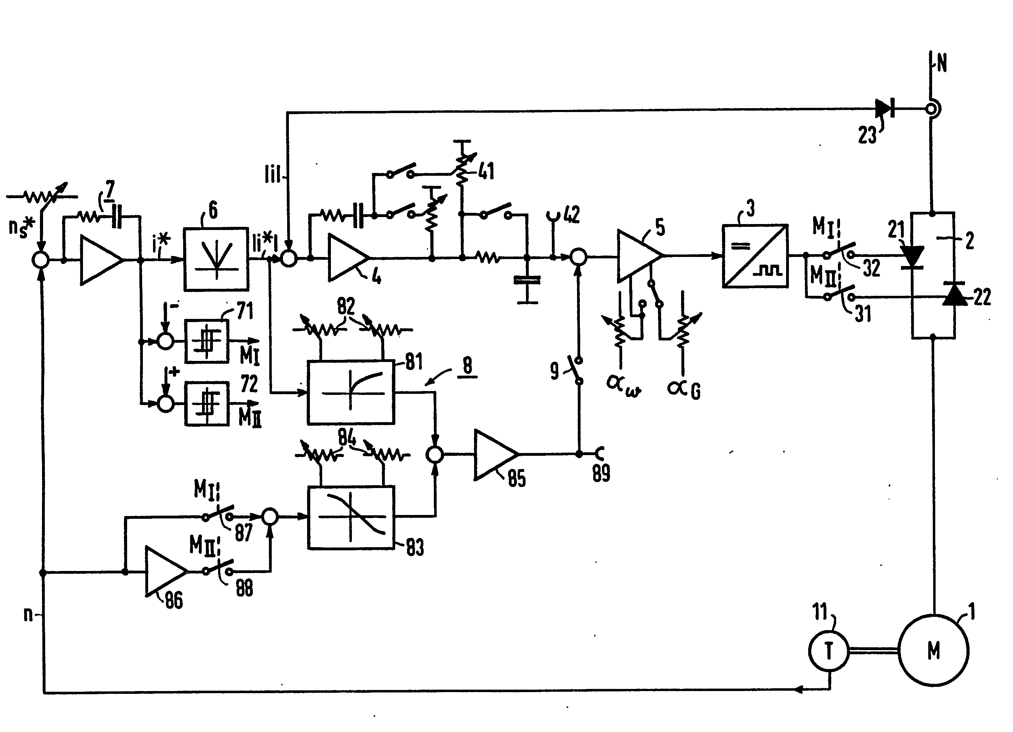

Anhand eines in der Zeichnung dargestellten Ausführungsbeispiels sei die Erfindung näher erläutert:

Die Ankerwicklung einer Gleichstrommaschine 1 wird über einen kreisstromfreien Thyristor-Umkehrstromrichter 2 mit zwei antiparallelgeschalteten Ventilgruppen 21 und 22 aus einem Wechselstromnetz M gespeist. Die Ansteuerbefehle für die Ventilgruppen 21 und 22 werden über eine von einer Kommandostufe 71, 72 gesteuerten, mit den Befehlen MI, MII gesteuerten Weiche-Schalter 31 bzw. 32 — je nach Ankerstromrichtung von einem Steuersatz 3 geliefert. Die Steuerspannung für den Steuersatz 3 wird über einen Addierverstärker 5, an dem Wechselrichtertrittgrenze $\alpha_W$ und Gleichrichtergrenze $\alpha_G$ einstellbar sind, von einem Stromregler 4 geliefert.

Der Drehzahlregler 7 der Maschine 1 erhält der Solldrehzahl $n_s^*$ und der Istdrehzahl $n$ — von einer Tachometermaschine 11 stammend — proportionale Eingangswerte und liefert an seinem Ausgang eine dem Stromsollwert $i^*$ proportionale Grösse. In einem Absolutwertbildner 6 wird aus dieser Grösse der Absolutwert $|i^*|$ gebildet und dem Stromregler 4 als Führungsgrösse vorgegeben. Ferner wird dem Stromregler ein dem Absolutwert $|i|$ des Stromistwertes $i$ proportionaler Wert als Istwert zugeführt. Der Stromistwert $i$ wird dabei wechselstromseitig gemessen und mittels des Gleichrichters 23 in einen entsprechenden Absolutwert $|i|$ verwandelt. Aus dem Vergleich von Stromsoll- und Istwert am Eingang des Stromreglers 4 wird im Stromregler die Steuerspannung für den Steuersatz 3 gebildet. Der Stronregler 4 kann dabei, wie durch die Rückführungsbeschaltung 41 angedeutet, vorteilhafterweise als sogenannter adaptiver Regler ausgebildet sein, d.h. als Regler, der sein Regelverhalten abhängig davon ändert, ob die Anordnung im Lückstrombereich arbeitet oder nicht. Die Auswahl der zutreffenden Rückführung wird dabei — wie nicht näher dargestellt — von der Kommandostufe übernommen.

Da nur die Absolutwerte von Stromführungsgrösse und Stromistwert miteinander verglichen werden, kann jeder Polarität des Stromregelausgangssignals auch ein definierter Betriebszustand des Umkehrstromrichters zugeordnet werden, z.B. bedeutet positive Polarität der Stromregelausgangsspannung einen Wechselrichterbefehl für den Steuersatz 3 und negative Polarität einen Befehl für Gleichrichterbetrieb. Die jeweils für die benötigte Stromrichtung (Momentenrichtung) vorgesehene Ventilgruppe 21 bzw. 22 wird ebenfalls durch die Kommandostufe mittels entsprechenden Öffnens und Schliessens der Schalter 31 bzw. 32 angewählt. Die Kommandostufe ermittelt dabei den Anwählbefehl aus der Polarität des Ausgangssignals des Drehzahlreglers 7. Von dieser erwähnten Kommandostufe sind der Einfachheit halber nur die beiden an den Ausgang des Drehzahlreglers 7 angeschlossenen Grenzwertmelder 71 und 72 dargestellt, an denen durch Vergleich mit festen Spannungen festgestellt wird, welche Ankerstromrichtung erforderlich ist. Diese Ankerstromrichtungen (Momentenrichtungen) sind jeweils mit $M_I$ bzw. $M_{II}$ bezeichnet. Sie sollen als entsprechende Steuerbefehle auf die Schalter 31 bzw. 32 gehen.

Eine Schaltung der vorstehend genannten Art ist im wesentlichen aus der DE-OS 3 020 139 bekannt.

Zusätzlich zu dieser bekannten Schaltung ist noch ein Dynamikzusatz 8 vorgesehen, mit dem die dynamischen Eigenschaften der Anordnung verbessert werden können. Dieser Dynamikzusatz 8 besteht aus einem Funktionsgeber 81, der an den Ausgang des Absolutwertbildners 6 angeschlossen ist, also einen der Stromführungsgrösse $i^*$ proportionalen Wert erhält und einem Drehzahlfunktionsgeber 83, dem eingangsseitig ein dem Drehzahlistwert $n$ proportionales Signal entweder über Schalter 87 oder über einen Umkehrverstärker 86 und Schalter 88 zugeführt wird. Die Funktionsverläufe und der Nullpunkt der beiden Funktionen in den Funktionsgebern 81 und 83 sind durch Potentiometer 82 und 84 einstellbar. Die in einem Addierverstärker 85 zusammengefassten Ausgangssignale der beiden Funktionsgeber 81 und 83 sind dann über einen Schalter 9 zusätzlich zum Ausgangssignal des Stromreglers 4 auf den Eingang des Addierverstärkers 5 und damit auf den Steuersatz 3 aufschaltbar.

Die Einstellung der Funktionsgeber 81 und 83 ist in der Weise vorgenommen, dass sie aus Stromführungsgrösse und Drehzahlistwert ein Signal bilden, das in etwa demjenigen Signal entspricht, das bei den gleichen Bedingungen der Stromregler 4 liefern würde, falls er voll in Eingriff käme. Diese Einstellung kann bei der Inbetriebnahme auf relativ einfache Weise folgendermassen ausgeführt werden:

Bei geöffnetem Schalter 9 wird z.B. im Stillstand und bei Strom Null durch Verändern der Potentiometer 82 an der Messbuchse 89 die gleiche Spannung eingestellt, wie sie an der Messbuchse 42 am Ausgang des Stromreglers 4 vorliegt. Anschliessend wird das gleiche für maximale Drehzahl ohne Belastung wiederholt. Damit erhält man einen Nullpunkt und eine Steilheit der Kennlinie, die den erforderlichen Verlauf zwischen Stromführungsgrösse i* und Drehzahl n ohne Belastung wiedergibt.

Anschliesend wiederholt sich das gleiche Spiel am Stromfunktionsgeber 83, und zwar wird bei maximalem Strom die gleiche Spannung an den Punkten 42 und 89 eingestellt. Sind die beiden Funktionsgeber 81 und 83 eingestellt, so wird der Schalter 9 geschlossen. Damit steht jeweils am Eingang des Addierverstärkers 5 in etwa derjenige Wert zur Verfügung, der sich bei dem geforderten Stromsollwert und dem vorliegenden Istwert als erforderlich für den Steuersatz 3 ergibt. Dies bedeutet, dass dann im Betriebsfall, durch die Vorsteuerung sofort der gewünschte Eingriff in den Umrichter vorgenommen wird, so dass nur ein verhältnissmässig kleiner Anteil zur genauen Anpassung vom Stromregler 4 geliefert werden muss. Damit ist die Regeldynamik des Stromreglers praktisch ohne grösseres Interesse und nur noch seine Genauigkeit wichtig. Diese lässt sich, wie eingangs erwähnt, auch sehr gut mit einem Mikroprozessor verwirklichen; ebenso wie die Erzeugung des Vorsteuersignals.

**Patentansprüche**

1. Regeleinrichtung für einen Stromrichter (2) mit mindestens einer durch einen Steuersatz gesteuerten Thyristorventilgruppe (21, 22) zur Speisung einer Gleichstrommaschine (1), mit einem von einem Drehzahlregler (7) geführten Stromregler (4), der dem Steuersatz (3) der Im Ankerstromkreis liegenden Ventilgruppe (21, 22) ein Steuersignal vorgibt, dadurch gekennzeichnet, dass auf den Steuersatz (3) ein von Drehzahlistwert (n) und Führungsgrösse (i*) des Ankerstromreglers (4) abhängiges Vorsteuersignal aufgeschaltet ist, das im wesentlichen schon dem erforderlichen Steuersignal entspricht, so dass durch den Stromregler selbst nur noch ein verhältnismässig kleiner Teil der vom Drehzahlregler (7) gelieferten Regelabweichung ausgeregelt werden muss.

2. Regeleinrichtung nach Anspruch 1, gekennzeichnet durch an den Antrieb angepasste Funktionsgeber (81, 83) zur Erzeugung von Steuerwerten, die von der Stromführungsgrösse (i*) und vom Drehzahlistwert (n) abhängig sind und vorzeichenrichtig zur Bildung des Vorsteuersignals addiert werden.

3. Verfahren zur Inbetriebnahme der Regeleinrichtung nach Anspruch 1, dadurch gekennzeichnet, dass die Steuerbefehle am Ausgang des Stromreglers (4) für verschiedene Werte von Drehzahl (n) und Strom (i) bei abgeschaltetem Vorsteuerbefehl ermittelt werden, das Vorsteuersignal auf jeweils gleiche Werte eingestellt wird und dass nach der Justierung das Vorsteuersignal für den Steuersatz (3) wirksam gemacht wird.

**Claims**

1. A regulating device for a current converter (2) having at least one thyristor group (21, 22) controlled by a control set to supply a direct current machine (1), having a current regulator (4) which is guided by a speed-regulating device (7) and supplies a control signal to the control set (3) of the group (21, 22) arranged in the armature circuit, characterised in that a preliminary control signal dependent upon the actual value (n) of the speed and the reference magnitude (i*) of the armature current regulator (4) is connected to the control set (3), which preliminary control signal essentially corresponds to the required control signal, so that only a relatively small part of the regulating deviation supplied by the speed regulator (7) has to be regulated by the current regulator itself.

2. A regulating device as claimed in Claim 1, characterised by the function generator (81, 83) being adapted to the drive and serving to produce control values dependent upon the current reference magnitude (i*) and the actual value (n) of the speed and added to be correct in accordance with the signs in order to form the preliminary control signal.

3. A method for operation of the regulating device as claimed in Claim 1, characterised in that the control commands at the output of the current regulator (4) are determined for different values of speed (n) and current (i) in the case of a disconnected preliminary control command, the preliminary control signal is respectively adjusted to identical values, and that following the adjustement the preliminary control signal is rendered effective for the control set (3).

**Revendications**

1. Dispositif de régulation pour un convertisseur de courant (2) comportant au moins un groupe de valves à thyristors (21, 22), commandé par un module de commande et servant à alimenter une machine à courant continu (1), un régulateur de courant (4) relié à un régulateur (5) de la vitesse de rotation et qui délivre un signal de commande au module de commande (3) du groupe de valves (21, 22) situé dans le circuit d'induit, caractérisé par le fait qu'au module de commande (3) est appliqué un signal de commande pilote, qui dépend de la valeur réelle (n) de la vitesse de rotation et de la grandeur de référence (i*) du régulateur (4) du courant d'induit et qui correspond déjà essentiellement au signal de commande nécessaire, de sorte que sous l'effet du régulateur de courant lui-même, seule encore une partie comparativement faible de l'écart de réglage fourni par le régulateur (7) de la vitesse de rotation doit être éliminée par réglage.

2. Dispositif de régulation suivant la revendication 1, caractérisé par des générateurs de fonction (81, 83), qui sont adaptés au dispositif d'entraînement et qui servent à produire des valeurs de commande qui dépendent de la grandeur pilote du courant (i*) et de la valeur réelle (n) de la vitesse de rotation et sont additionnés, d'une façon correcte du point de vue du signe, pour former le signal de commande pilote.

3. Procédé pour la mise en service du dispositif de régulation suivant la revendication 1, caractérisé par le fait qu'on détermine les ordres de commande à la sortie du régulateur de courant (4) pour différentes valeurs de la vitesse de rotation (n) du courant (i), alors que l'ordre de commande pilote est débranché, qu'on règle le signal de commande pilote sur des valeurs respectivement identiques et qu'après ajustement, on réactive le signal de commande pilote pour le module de commande (3).